# EUROPÄISCHE PATENTSCHRIFT

(11) **EP 4 419 382 B1**
(45) Veröffentlichungstag und Bekanntmachung des Hinweises auf die Patenterteilung: **29.04.2026**
(21) Anmeldenummer: 22800669.8
(22) Anmeldetag: 11.10.2022
(51) Int. Cl.: B60N 2/10, B60N 2/12

(54) **KRAFTFAHRZEUGSITZ FÜR EIN KRAFTFAHRZEUG**
MOTOR VEHICLE SEAT FOR A MOTOR VEHICLE
SIÈGE DE VÉHICULE AUTOMOBILE POUR VÉHICULE AUTOMOBILE

(30) Priorität: 19.10.2021 DE 102021127103
(43) Veröffentlichungstag der Anmeldung: 28.08.2024
(73) Patentinhaber: Bayerische Motoren Werke Aktiengesellschaft, 80809 München (DE)
(72) Erfinder: LENG, Michael, 82269 Geltendorf (DE)
(86) Internationale Anmeldenummer: PCT/EP2022/078223
(87) Internationale Veröffentlichungsnummer: WO 2023/066718

(56) Entgegenhaltungen:
- WO-A1-2021/021162
- DE-A1- 102013 006 485
- US-A- 4 925 228

## Beschreibung

Die vorliegende Erfindung betrifft einen Kraftfahrzeugsitz für ein Kraftfahrzeug mit den Merkmalen des Oberbegriffs des Patentanspruchs 1.

Damit bei einem dreitürigen Kraftfahrzeug Insassen zu einer zweiten Sitzreihe gelangen können oder bei einem fünftürigen Kraftfahrzeug Insassen zu einer dritten Sitzreihe gelangen können, ist es regelmäßig erforderlich, dass ein Kraftfahrzeugsitz aus einer Gebrauchsstellung, in welcher ein Insasse auf dem Kraftfahrzeugsitz Platz nehmen kann, in eine Einstiegsstellung verstellbar ist, in der zwischen dem Kraftfahrzeugsitz und einer Hinterkante eines Türausschnitts des Kraftfahrzeugs ein Raum freigegeben ist, welcher einen Zutritt zu der zweiten bzw. dritten Sitzreihe ermöglicht.

Ein Kraftfahrzeugsitz, der eine derartige Verstellbewegung ermöglich, ist beispielsweise aus der DE 10 2004 047 250 A1 bekannt und umfasst eine Sitzstruktur und eine Vorrichtung zur Kraftfahrzeugsitzverstellung. Die Vorrichtung zur Kraftfahrzeugsitzverstellung weist eine Vielzahl von Viergelenken auf, welche zum Verstellen der Sitzstruktur mit dieser verbunden sind.

Bei dem in der DE 10 2004 047 250 A1 beschriebenen Kraftfahrzeugsitz bedarf das Verstellen der Sitzstruktur zwischen der Gebrauchsstellung und der Einstiegsstellung also der Vorrichtung zur Kraftfahrzeugsitzverstellung, umfassend die Vielzahl von Viergelenken. Die Vorrichtung zur Kraftfahrzeugsitzverstellung ist mithin konstruktiv aufwendig.

Aus der US 4 925 228 A ist ein Kraftfahrzeugsitz für ein Kraftfahrzeug bekannt. Dieser weist eine Sitzstruktur mit einem Sitzelement und einer Rückenlehne auf, wobei die Sitzstruktur aus einer Gebrauchsstellung, in der sich das Sitzelement in etwa horizontal erstreckt, über eine Zwischenstellung in eine Einstiegsstellung verstellbar ist, in der das Sitzelement aus der Horizontalen geneigt ist. Ferner hat der Kraftfahrzeugsitz eine Kulissenführung, mittels welcher die Sitzstruktur derart führbar ist, dass die Sitzstruktur von der Gebrauchsstellung bis zu der Zwischenstellung nach vorn und oben bewegbar ist und von der Zwischenstellung bis zu der Einstiegsstellung rotatorisch bewegbar ist.

Die WO 2021/021162 A1 beschreibt einen Fahrzeugsitz mit seitlich angeordneten Kulissenführungen.

Aus der DE 10 2013 006485 A1 ebenfalls ein Fahrzeugsitz mit einer Kulissenführung bekannt.

Es ist Aufgabe der vorliegenden Erfindung einen Kraftfahrzeugsitz bereitzustellen, welcher mittels einer einfachen Konstruktion zwischen einer Gebrauchsstellung und einer Einstiegsstellung verstellbar ist.

Diese Aufgabe ist durch den Kraftfahrzeugsitz mit den Merkmalen des Patentanspruchs 1 gelöst.

Erfindungsgemäß wird also ein Kraftfahrzeugsitz für ein Kraftfahrzeug bereitgestellt, welcher eine Sitzstruktur mit einem Sitzelement und einer Rückenlehne und eine Kulissenführung umfasst. Die Sitzstruktur ist von einer Gebrauchsstellung, in der sich das Sitzelement in etwa horizontal erstreckt und imstande ist, einen Insassen aufzunehmen, über eine Zwischenstellung in eine Einstiegsstellung verstellbar und umgekehrt. In der Zwischenstellung ist das Sitzelement aus der Gebrauchsstellung in Kraftfahrzeugsitz-Längsrichtung nach vorne verschoben. In der Einstiegsstellung ist das Sitzelement aus der Horizontalen, um eine sich in Kraftfahrzeugsitz-Querrichtung erstreckende Rotationsachse in Kraftfahrzeugsitz-Längsrichtung, insbesondere nach vorne geneigt. Hierdurch wird ein Platz hinter dem Kraftfahrzeugsitz, insbesondere zwischen dem Kraftfahrzeugsitz und einer Hinterkante eines Türausschnitts freigegeben. Somit kann der Insasse zu einem hinter dem Kraftfahrzeugsitz befindlichen Raum gelangen. In dem hinter dem Kraftfahrzeugsitz befindlichen Raum ist beispielsweise ein weiterer Kraftfahrzeugsitz einer hinteren Sitzreihe angeordnet. Mittels der Kulissenführung ist die Sitzstruktur bei einem Verstellen der Sitzstruktur von der Gebrauchsstellung bis zu der Zwischenstellung derart führbar, dass sich die Sitzstruktur translatorisch bewegt. Von der Zwischenstellung bis zu der Einstiegsstellung ist die Sitzstruktur mittels der Kulissenführung derart führbar, dass sich die Sitzstruktur rotatorisch bewegt.

Kerngedanke der Erfindung ist es also den Kraftfahrzeugsitz mit einer Kulissenführung zu versehen, die derart ausgestaltet ist, dass diese in einem Bereich von der Gebrauchsstellung bis zu der Zwischenstellung (ausgeschlossen die Zwischenstellung) eine rein translatorische Bewegung der Sitzstruktur ermöglicht und in einem Bereich von der Zwischenstellung bis zu der Einstiegsstellung eine rein rotatorische Bewegung der Sitzstruktur zulässt. Mittels der translatorischen Bewegung ist also die rotatorische Bewegung freigebbar. Somit ist ein Verstellen der Sitzstruktur zwischen der Gebrauchsstellung und der Einstiegsstellung konstruktiv einfach ermöglicht.

Nach der Erfindung umfasst die Kulissenführung eine erste Führungskulisse und einen ersten Führungszapfen. Die erste Führungskulisse erstreckt sich in Kraftfahrzeugsitz-Längsrichtung. Der erste Führungszapfen erstreckt sich in Kraftfahrzeugsitz-Querrichtung. Der erste Führungszapfen ist in Kraftfahrzeugsitz-Längsrichtung verschiebbar in der ersten Führungskulisse geführt.

Der erste Führungszapfen ist beispielsweise starr mit der Sitzstruktur, insbesondere dem Sitzelement verbunden und erstreckt sich in Kraftfahrzeugsitz-Querrichtung nach außen, d.h. weg von dem Sitzelement. Die erste Führungskulisse ist beispielsweise karosseriefest. Insbesondere ist die erste Führungskulisse beispielsweise mit einem Boden des Kraftfahrzeugs und/oder der Führungsschiene des Kraftfahrzeugsitzes starr verbunden.

Alternativ kann der erste Führungszapfen karosseriefest anordbar sein. Insbesondere kann der erste Führungszapfen mit dem Boden des Kraftfahrzeugs und/oder der Führungsschiene des Kraftfahrzeugsitzes starr verbunden sein. Der erste Führungszapfen kann sich in Kraftfahrzeugsitz-Querrichtung nach innen erstrecken, also in Richtung der Sitzstruktur, insbesondre in Richtung des Sitzelements. Die erste Führungskulisse kann in der Sitzstruktur, insbesondere in dem Sitzelement ausgebildet sein.

Nach der Erfindung umfasst die Kulissenführung eine zweite Führungskulisse und einen zweiten Führungszapfen. Die zweite Führungskulisse umfasst einen sich in Kraftfahrzeugsitz-Längsrichtung erstreckenden geraden Abschnitt und einen gebogenen, insbesondere kreisbogenförmigen Kreisbogenabschnitt. Der Kreisbogenabschnitt ist in Kraftfahrzeugsitz-Längsrichtung vor dem geraden Abschnitt, an diesen angrenzend angeordnet. Der gerade Abschnitt geht also in den Kreisbogenabschnitt über. Der zweite Führungszapfen ist verschiebbar in der zweiten Führungskulisse geführt. Insbesondere ist der zweite Führungszapfen in dem geraden Abschnitt der zweiten Führungskulisse in Kraftfahrzeugsitz-Längsrichtung verschiebbar geführt. In dem Kreisbogenabschnitt der zweiten Führungskulisse ist der zweite Führungszapfen insbesondere in Kraftfahrzeugsitz-Längsrichtung und in Kraftfahrzeugsitz-Hochrichtung verschiebbar geführt.

Der zweite Führungszapfen ist beispielsweise starr mit der Sitzstruktur, insbesondere dem Sitzelement verbunden und erstreckt sich in Kraftfahrzeugsitz-Querrichtung nach außen, d.h. weg von dem Sitzelement. Die zweite Führungskulisse ist beispielsweise karosseriefest. Insbesondere ist die zweite Führungskulisse beispielsweise mit einem Boden des Kraftfahrzeugs und/oder der Führungsschiene des Kraftfahrzeugsitzes starr verbunden.

Alternativ kann der zweite Führungszapfen karosseriefest anordbar sein. Insbesondere kann der zweite Führungszapfen mit dem Boden des Kraftfahrzeugs und/oder der Führungsschiene des Kraftfahrzeugsitzes starr verbunden sein. Der zweite Führungszapfen kann sich in Kraftfahrzeugsitz-Querrichtung nach innen erstrecken, also in Richtung der Sitzstruktur, insbesondre in Richtung des Sitzelements. Die erste Führungskulisse kann in der Sitzstruktur, insbesondere in dem Sitzelement ausgebildet sein. Hierbei ist die Sitzstruktur ausgehend von der Gebrauchsstellung zunächst aufgrund der geradlinigen Ausgestaltung des geraden Abschnitts der zweiten Führungskulisse translatorisch in Kraftfahrzeugsitz-Längsrichtung nach vorne verschiebbar. Sobald der zweite Führungszapfen das vordere Ende des geraden Abschnitts erreicht und in den Kreisbogenabschnitt gelangt, wird die Sitzstruktur um eine sich in Kraftfahrzeugsitz-Querrichtung erstreckende Rotationsachse rotiert.

Der Kreisbogenabschnitt der zweiten Führungskulisse kann sich ausgehend von dem geraden Abschnitt in Kraftfahrzeugsitz-Hochrichtung nach oben und in Kraftfahrzeugsitz-Längsrichtung nach vorne erstrecken.

Die erste Führungskulisse oder der erste Führungszapfen ist beispielsweise in einem Seitenelement einer Kraftfahrzeugsitzstrukturaufnahme angeordnet.

Die zweite Führungskulisse oder der zweite Führungszapfen ist beispielsweise in dem Seitenelement der Kraftfahrzeugsitzstrukturaufnahme angeordnet.

Das Seitenelement kann in Kraftfahrzeugsitz-Querrichtung seitlich der Sitzstruktur, insbesondere seitlich des Sitzelements angeordnet sein.

Das Seitenelement kann sich in Kraftfahrzeugsitz-Längsrichtung erstrecken.

Der erste Führungszapfen oder die erste Führungskulisse ist beispielsweise seitlich an der Sitzstruktur, insbesondere seitlich an dem Sitzelement fixiert bzw. ausgebildet.

Der zweite Führungszapfen oder die zweite Führungskulisse ist beispielsweise seitlich an der Sitzstruktur, insbesondere seitlich an dem Sitzelement fixiert bzw. angeordnet.

Die erste Führungskulisse kann in Kraftfahrzeugsitz-Längsrichtung vor der zweiten Führungskulisse angeordnet sein.

Bei einer bevorzugten Ausführungsform des Kraftfahrzeugsitzes nach der Erfindung bildet der erste Führungszapfen die sich in Kraftfahrzeugsitz-Querrichtung erstreckende Rotationsachse, um welche die Sitzstruktur verschwenkbar ist, wenn der zweite Führungszapfen in dem Kreisbogenabschnitt der zweiten Führungskulisse angeordnet ist.

Hierbei kann der erste Führungszapfen an einem in Kraftfahrzeugsitz-Längsrichtung vorderen Ende der ersten Führungskulisse anliegen.

Der erste Führungszapfen kann also einen Kreismittelpunkt des Kreisbogenabschnitts der zweiten Führungskulisse bilden, wenn der zweite Führungszapfen in dem Kreisbogenabschnitt der zweiten Führungskulisse angeordnet ist und/oder wenn der erste Führungszapfen an einem in Kraftfahrzeugsitz-Längsrichtung vorderen Ende der ersten Führungskulisse anliegt.

Bei einer bevorzugten Ausführungsform umfasst der Kraftfahrzeugsitz nach der Erfindung eine Verriegelungsanordnung zur Sicherung der Sitzstruktur in der Gebrauchsstellung, insbesondere gegen Rotation. Die Verriegelungsanordnung umfasst einen Verriegelungsbolzen und eine Aussparung. In der Aussparung ist der Verriegelungsbolzen in der Gebrauchsstellung angeordnet. Die Aussparung ist in Kraftfahrzeugsitz-Längsrichtung an einer Seite offen, so dass der Verriegelungsbolzen bei einem Verstellen der Sitzstruktur aus der Gebrauchsstellung in die Einstiegsstellung aus der Aussparung entfernbar ist. Hierdurch wird eine Rotation des Kraftfahrzeugsitzes ermöglicht, so dass der Kraftfahrzeugsitz in die Gebrauchsstellung verschwenkbar ist.

Der Verriegelungsbolzen kann seitlich an der Sitzstruktur, insbesondere an dem Sitzelement angeordnet sein und sich in Kraftfahrzeugsitz-Querrichtung nach außen, d.h. von der Sitzstruktur weg, erstrecken. Die Aussparung kann in dem Seitenelement ausgebildet sein und in Kraftfahrzeugsitz-Längsrichtung nach vorne geöffnet sein.

Somit kann der Verriegelungsbolzen in der Gebrauchsstellung in der Aussparung angeordnet sein und in der Einstiegsstellung außerhalb der Aussparung, insbesondere in Kraftfahrzeugsitz-Längsrichtung vor der Aussparung angeordnet sein.

Alternativ kann der Verriegelungsbolzen seitlich an dem Seitenelement angeordnet sein und sich in Kraftfahrzeugsitz-Querrichtung nach innen, d.h. in Richtung der Sitzstruktur, erstrecken. Die Aussparung kann an der Sitzstruktur, insbesondere an dem Sitzelement ausgebildet sein und in Kraftfahrzeugsitz-Längsrichtung nach hinten geöffnet sein.

Mithin ist der Verriegelungsbolzen in der Gebrauchsstellung beispielsweise in der Aussparung anordbar, während er in der Einstiegsstellung außerhalb der Aussparung, insbesondere in Kraftfahrzeugsitz-Längsrichtung hinter der Aussparung angeordnet ist.

Die Aussparung kann U-förmig sein. Insbesondere kann die Aussparung die Form eines liegenden Us aufweisen.

Bei einer beispielhaften Ausführungsform des Kraftfahrzeugsitzes nach der Erfindung ist die Aussparung in Kraftfahrzeugsitz-Längsrichtung kürzer als die erste Führungskulisse.

Bei einer bevorzugten Ausführungsform des Kraftfahrzeugsitzes nach der Erfindung ist die Aussparung in Kraftfahrzeugsitz-Längsrichtung kürzer als der gerade Abschnitt der zweiten Führungskulisse.

Die Verriegelungsanordnung kann ein Sicherungselement umfassen, welches die Sitzstruktur in der Gebrauchsstellung gegen ein Verstellen in Kraftfahrzeugsitz-Längsrichtung nach vorne sichert.

Das Sicherungselement verhindert beispielsweise ein Verschieben des Verriegelungsbolzens relativ zu der Aussparung in Kraftfahrzeugsitz-Längsrichtung.

Das Sicherungselement ist beispielsweise zwischen einer Sicherungsstellung und einer Freigabestellung verstellbar. In der Sicherungsstellung ist der Verriegelungsbolzen in der Aussparung, insbesondere bei einem Verschieben in Kraftfahrzeugsitz-Längsrichtung gesichert. In der Freigabestellung kann der Verriegelungsbolzen aus der Aussparung entfernt oder in die Aussparung eingebracht werden.

Das Sicherungselement kann in der Sicherungsstellung die Öffnung der Aussparung schließen.

Die Sitzstruktur kann manuell zwischen der Gebrauchsstellung und der Einstiegsstellung verstellbar sein.

Bei einer beispielhaften Ausführungsform umfasst der Kraftfahrzeugsitz nach der Erfindung eine Antriebseinheit. Mittels der Antriebseinheit ist die Sitzstruktur automatisiert zwischen der Gebrauchsstellung und der Einstiegsstellung verstellbar.

Die Antriebseinheit weist beispielsweise einen sich in Kraftfahrzeugsitz-Querrichtung erstreckenden Antriebsbolzen auf, welcher drehbar an der Sitzstruktur fixiert ist. Mittels eines Motors ist der Antriebsbolzen rotierbar.

Der Antriebsbolzen kann an der Oberseite des Seitenelements derart aufliegen, dass durch Rotation des Antriebsbolzens die Sitzstruktur zwischen der Gebrauchsstellung und der Einstiegsstellung verstellbar ist, d.h. der Antriebsbolzen seine Rotationsbewegung an die Sitzstruktur überträgt, wodurch die Sitzstruktur eine Verstellbewegung erfährt.

Alternativ kann das erste Seitenelement eine Antriebsaussparung umfassen, in welcher der Antriebsbolzen derart angeordnet ist, dass durch Rotation des Antriebsbolzens die Sitzstruktur zwischen der Gebrauchsstellung und der Einstiegsstellung verstellbar ist.

Der Antriebsbolzen kann ein Zahnrad umfassen, das mit einer Verzahnung der Oberseite des Seitenelements bzw. einer Verzahnung einer die zweite Aussparung definierenden Wand kämmt.

Die Oberseite des Seitenelements kann, insbesondere in dem Bereich, in welchem der Antriebsbolzen verschiebbar ist, einen geraden Abschnitt und einen in Kraftfahrzeugsitz-Längsrichtung vorne an den geraden Abschnitt angrenzenden gekrümmten Abschnitt umfassen.

Der gekrümmte Abschnitt kann sich ausgehend von dem geraden Abschnitt der Oberseite des Seitenelements in Kraftfahrzeugsitz-Längsrichtung nach vorne und in Kraftfahrzeugsitz-Hochrichtung nach unten erstrecken.

Somit kann ein Kontakt zwischen dem Antriebsbolzen und der Oberseite des Seitenelements sowohl bei der translatorischen Bewegung als auch bei der rotatorischen Bewegung der Sitzstruktur sichergestellt werden.

Die zweite Aussparung kann einen geraden Abschnitt und einen in Kraftfahrzeugsitz-Längsrichtung vorne an den geraden Abschnitt angrenzenden gekrümmten Abschnitt umfassen.

Der gekrümmte Abschnitt kann sich ausgehend von dem geraden Abschnitt der zweiten Aussparung in Kraftfahrzeugsitz-Längsrichtung nach vorne und in Kraftfahrzeugsitz-Hochrichtung nach unten erstrecken.

Mithin ist ein Kontakt zwischen dem Antriebsbolzen und der die zweite Aussparung definierenden Wand bei der translatorischen Bewegung und bei der rotatorischen Bewegung der Sitzstruktur sichergestellt.

Der gekrümmte Abschnitt kann die Form eines Kreisbogens aufweisen.

Der Kreismittelpunkt des Kreisbogens ist beispielsweise die Rotationsachse, um welche die Sitzstruktur verschwenkbar ist, also der erste Führungszapfen, wenn der zweite Führungszapfen in dem Kreisbogenabschnitt der zweiten Führungskulisse angeordnet ist.

Die Sitzstrukturaufnahme, insbesondere das Seitenelement kann an einer Sitzschiene, welche an einem Boden des Kraftfahrzeugs fixiert ist und/oder an dem Boden des Kraftfahrzeugs fixierbar sein.

Bei einer bevorzugten Ausführungsform umfasst der Kraftfahrzeugsitz nach der Erfindung eine weitere im Vorhergehenden beschriebene Kulissenführung. Die weitere Kulissenführung ist an einer der Kulissenführung in Kraftfahrzeugsitz-Querrichtung gegenüberliegenden Seite des Sitzelements angeordnet.

Die weitere Kulissenführung kann bezogen auf eine Kraftfahrzeugsitz-Längsmittelebene spiegelsymmetrisch zu der Kulissenführung ausgebildet sein.

Bei einer beispielhaften Ausführungsform umfasst der Kraftfahrzeugsitz nach der Erfindung eine weitere im Vorhergehenden beschriebene Verriegelungsanordnung. Die weitere Verriegelungsanordnung ist an einer der Verriegelungsanordnung in Kraftfahrzeugsitz-Querrichtung gegenüberliegenden Seite des Sitzelements angeordnet.

Die weitere Verriegelungsanordnung kann bezogen auf eine Kraftfahrzeugsitz-Längsmittelebene spiegelsymmetrisch zu der Verriegelungsanordnung ausgebildet sein.

Der Kraftfahrzeugsitz kann eine weitere im Vorhergehenden beschriebene Antriebseinheit umfassen. Die weitere Antriebseinheit kann an einer der Antriebseinheit in Kraftfahrzeugsitz-Querrichtung gegenüberliegenden Seite des Sitzelements angeordnet sein.

Die weitere Antriebseinheit kann bezogen auf eine Kraftfahrzeugsitz-Längsmittelebene spiegelsymmetrisch zu der Antriebseinheit ausgebildet sein.

Die Erfindung ist im Folgenden anhand eines in der Zeichnung dargestellten Ausführungsbeispiels näher erläutert. Es zeigt:
- **Fig. 1**: eine Seitenansicht eines Kraftfahrzeugsitzes nach der Erfindung in einer Gebrauchsstellung, umfassend ein Seitenelement;
- **Fig. 2**: eine Seitenansicht des Kraftfahrzeugsitzes aus Figur 1 in einer Zwischenstellung;
- **Fig. 3**: eine Seitenansicht des Kraftfahrzeugsitzes aus Figur 1 in einer Einstiegsstellung; und
- **Fig. 4**: eine Detailansicht eines alternativen Seitenelements.

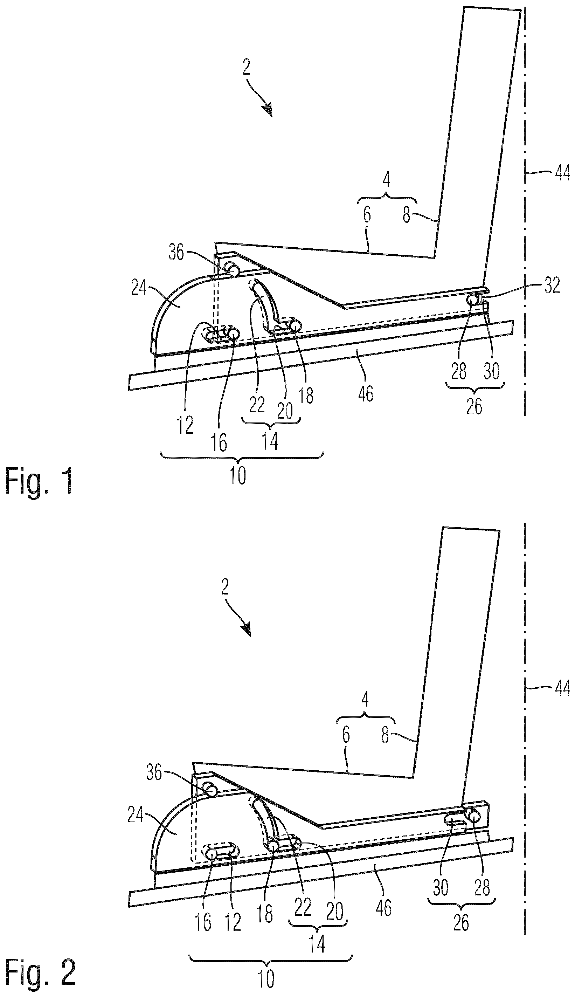

In den **Figuren 1 bis 3** ist ein Kraftfahrzeugsitz 2 nach der Erfindung dargestellt. Der Kraftfahrzeugsitz 2 umfasst eine Sitzstruktur 4 mit einem Sitzelement 6 und einer Rückenlehne 8, eine Kraftfahrzeugsitzstrukturaufnahme, eine Kulissenführung 10, eine Verriegelungsanordnung 26 und eine Antriebsanordnung.

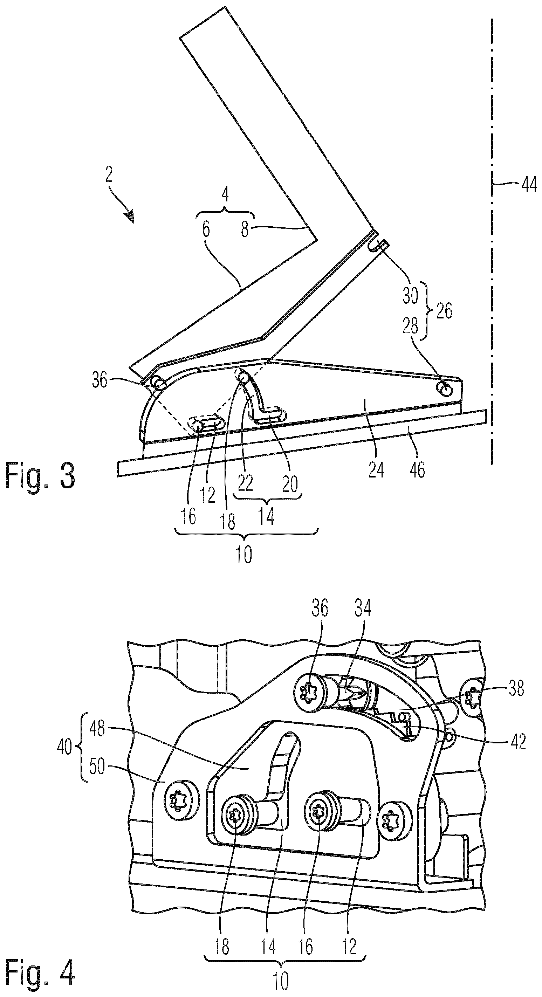

Die Sitzstruktur 4 ist mittels der Kulissenführung 10 und der Antriebsanordnung zwischen einer in Figur 1 dargestellten Gebrauchsstellung über eine in Figur 2 gezeigte Zwischenstellung in eine in Figur 3 gezeigte Einstiegsstellung verstellbar.

Die Kulissenführung 10 dient hierbei einer Führung der Verstellbewegung. Mittels der Antriebsanordnung ist die Verstellbewegung automatisiert ausführbar.

In der Gebrauchsstellung verläuft das Sitzelement 6 im Wesentlichen horizontal, so dass ein Insasse auf der Sitzstruktur 4 sitzen kann. In der Zwischenstellung ist die Sitzstruktur 4 aus der Gebrauchsstellung translatorisch in Kraftfahrzeugsitz-Längsrichtung nach vorne verschoben. Ist die Sitzstruktur 4 zusätzlich zu der translatorischen Verschiebung in Kraftfahrzeugsitz-Längsrichtung nach vorne, d.h. zu der Verschiebung der Sitzstruktur 4 in die Zwischenstellung, um eine sich in Kraftfahrzeugsitz-Querrichtung erstreckende Rotationsachse nach vorne und oben verschwenkt, befindet sich die Sitzstruktur 4 in der Einstiegsstellung. In der Einstiegsstellung ist zwischen der Sitzstruktur 4 und einer Hinterkante eines Türausschnitts 44 ein Raum freigegeben, welcher einen Zutritt zu einem hinter dem Kraftfahrzeugsitz 2 befindlichen Bereich ermöglicht.

Um eine derartige Verstellbewegung zu ermöglichen, umfasst die Kulissenführung 10 eine erste Führungskulisse 12, eine zweite Führungskulisse 14, einen ersten Führungszapfen 16 und einen zweiten Führungszapfen 18. Die erste Führungskulisse 12 und die zweite Führungskulisse 14 sind jeweils als eine Ausnehmung in einem Seitenelement 24 der Kraftfahrzeugsitzstrukturaufnahme ausgebildet. Das Seitenelement 24 befindet sich in Kraftfahrzeugsitz-Querrichtung seitlich neben der Sitzstruktur 4, insbesondere dem Sitzelement 6 und ist an einer Sitzlängsverstellung 46 des Kraftfahrzeugsitzes 2 fixiert, welche wiederum an einem Kraftfahrzeugboden fixiert ist.

Es ist ebenfalls denkbar, dass die Kraftfahrzeugsitzstrukturaufnahme ein weiteres Seitenelement umfasst, welches in Kraftfahrzeugsitz-Querrichtung auf der dem ersten Seitenelement 24 gegenüberliegenden Seite der Sitzstruktur 4 angeordnet ist und eine weitere erste Führungskulisse und eine weitere zweite Führungskulisse umfasst, in welchen ein weiterer erste Führungszapfen bzw. ein weiterer zweiter Führungszapfen angeordnet sind.

Die erste Führungskulisse 12 ist eine sich in Kraftfahrzeugsitz-Längsrichtung erstreckende Ausnehmung. Die erste Führungskulisse 12 ist in Kraftfahrzeugsitz-Längsrichtung vor der zweiten Führungskulisse 14 angeordnet.

Die zweite Führungskulisse 14 umfasst einen geraden Abschnitt 20 und einen gekrümmten, insbesondere kreisbogenförmigen Kreisbogenabschnitt 22. Der gerade Abschnitt 20 grenzt in Kraftfahrzeugsitz-Längsrichtung hinten an den Kreisbogenabschnitt 22 an. Insbesondere geht der Kreisbogenabschnitt 22 in den geraden Abschnitt 20 über. Der Kreisbogenabschnitt 22 erstreckt sich ausgehend von dem geraden Abschnitt 20 kreisbogenförmig in Kraftfahrzeugsitz-Hochrichtung nach oben und in Kraftfahrzeugsitz-Längsrichtung nach vorne.

In der ersten Führungskulisse 12 ist ein erster Führungszapfen 16 verschiebbar geführt. Die zweite Führungskulisse 14 lagert einen zweiten Führungszapfen 18 verschiebbar. Der erste Führungszapfen 16 und der zweite Führungszapfen 18 sind jeweils an der Sitzstruktur 4 fixiert und erstrecken sich in Kraftfahrzeugsitz-Querrichtung in Richtung des Seitenelements 24.

Die erste Führungskulisse 12 und der gerade Abschnitt 20 der zweiten Führungskulisse 14 sind in Kraftfahrzeugsitz-Längsrichtung gleich lang. Somit liegt der erste Führungszapfen 16, wenn der zweite Führungszapfen 18 in Kraftfahrzeugsitz-Längsrichtung hinten an einer den geraden Abschnitt 20 der zweiten Führungskulisse 14 definierenden Wand anliegt, in Kraftfahrzeugsitz-Längsrichtung hinten an einer die erste Führungskulisse 12 definierenden Wand an. Liegt der zweite Führungszapfen 18 hingegen an der den geraden Abschnitt 20 definierenden Wand in Kraftfahrzeugsitz-Längsrichtung vorne an, liegt der erste Führungszapfen 16 ebenfalls in Kraftfahrzeugsitz-Längsrichtung vorne an der die erste Führungskulisse 12 definierenden Wand an.

Zum Verschieben des ersten Führungszapfens 16 in der ersten Führungskulisse 12 und des zweiten Führungszapfens 14 in der zweiten Führungskulisse 18 umfasst die Antriebsanordnung einen Antriebsbolzen 36. Der Antriebsbolzen 36 ist um eine sich in Kraftfahrzeugsitz-Querrichtung erstreckende Rotationsachse rotierbar an der Sitzstruktur 4 fixiert. Eine (nicht dargestellte) Verzahnung des Antriebsbolzens 36 kämmt mit einer (nicht dargestellten) auf der Oberseite des Seitenelements 24 ausgebildeten Verzahnung. Somit wird die Sitzstruktur, wenn der Antriebsbolzen 36 mittels eines Motors rotiert wird, relativ zu dem Seitenelement 24 und mithin relativ zu dem Kraftfahrzeugboden bewegt.

Bei einem Verschieben der Sitzstruktur 4 aus der Gebrauchsstellung in Kraftfahrzeugsitz-Längsrichtung stößt der erste Führungszapfen 16 und der zweite Führungszapfen 18 an die die erste Führungskulisse 12 bzw. den geraden Abschnitt 20 der zweiten Führungskulisse 14 in Kraftfahrzeugsitz-Längsrichtung vorne begrenzende Wand an. Diese Position wird als Zwischenstellung bezeichnet.

Verschiebt die Antriebseinheit die Sitzstruktur 4 in Kraftfahrzeugsitz-Längsrichtung ausgehend von der Zwischenstellung weiter nach vorne, wird die Sitzstruktur 4 aufgrund des Kreisbogenabschnitts 22 der zweiten Führungskulisse 14 und des zweiten Führungszapfens 18 um die sich in Kraftfahrzeugsitz-Querrichtung erstreckende Rotationsachse verschwenkt. Die Rotationsachse wird hierbei von dem ersten Führungszapfen 16 definiert, d.h. die Rotationsachse erstreckt sich durch den Mittelpunkt des ersten Führungszapfens 16.

Damit sichergestellt ist, dass die Verzahnung des Antriebsbolzens 36 kontinuierlich mit der auf der Oberseite des Seitenelements 24 ausgebildeten Verzahnung kämmt, umfasst die Oberseite des Seitenelements 24 einen geraden Abschnitt und einen kreisbogenförmigen Abschnitt. Der kreisbogenförmige Abschnitt grenzt in Kraftfahrzeugsitz-Längsrichtung vorne an den geraden Abschnitt derart an, dass der Antriebsbolzen 36 auf dem geraden Abschnitt des Seitenelements 24 aufliegt, wenn sich der zweite Führungszapfen 18 in dem geraden Abschnitt 20 der zweiten Führungskulisse 14 befindet, und der Antriebsbolzen 36 auf dem kreisbogenförmigen Abschnitt des Seitenelements 24 aufliegt, wenn der zweite Führungszapfen 18 in dem Kreisbogenabschnitt 22 der zweiten Führungskulisse 14 angeordnet ist. Der Kreisbogenmittelpunkt des kreisbogenförmigen Abschnitts des Seitenelements 24 liegt in dem Mittelpunkt des ersten Führungszapfens 16.

Um eine auf den ersten Führungszapfen 16 und auf den zweiten Führungszapfen 18 in der Gebrauchsstellung, insbesondere nach vorne und oben wirkende Kraft zu reduzieren, umfasst der Kraftfahrzeugsitz 2 eine Verriegelungsanordnung 26. Die Verriegelungsanordnung 26 weist eine Aussparung 30 und einen Verriegelungsbolzen 28 auf. Damit der Verriegelungsbolzen 28 nicht ungewollt aus der Aussparung entfernt wird, umfasst die Verriegelungsanordnung 26 ein Sicherungselemente 32.

Die Aussparung 30 ist an einem in Kraftfahrzeugsitz-Längsrichtung hinteren Ende der Sitzstruktur 4, insbesondere des Sitzelements 6 ausgebildet. Der Verriegelungsbolzen 28 ist an dem Seitenelement 24 fixiert und erstreckt sich in Kraftfahrzeugsitz-Querrichtung nach innen, d.h. in Richtung der Sitzstruktur 4.

In der Gebrauchsstellung der Sitzstruktur 4 ist der Verriegelungsbolzen 28 in der Aussparung 30 derart angeordnet, dass er in Kraftfahrzeugsitz-Längsrichtung vorne und in Kraftfahrzeugsitz-Hochrichtung oben und unten an einer die Aussparung 30 definierenden Wand anliegt. In Kraftfahrzeugsitz-Längsrichtung hinter dem Verriegelungsbolzen 28 ist in der Gebrauchsstellung das Sicherungselement 32 angeordnet.

Soll die Sitzstruktur 4 aus der Gebrauchsstellung in Richtung der Einstiegsstellung verstellt werden, wird das Sicherungselement 32 hinter dem Verriegelungsbolzen 28 entfernt. Die Aussparung 30 ist in Fahrzeugsitz-Längsrichtung hinten offen und kürzer als der gerade Abschnitt 20 des zweiten Führungszapfen 18. Insbesondere weist die Aussparung 30 die Form eines liegenden Us auf. Durch Verschieben der Sitzstruktur 4 in Kraftfahrzeugsitz-Längsrichtung nach vorne wird somit, spätestens bei Erreichen der Zwischenstellung, der Verriegelungsbolzen 28 aus der Aussparung 30 entfernt.

In **Figur 4** ist ein alternatives Seitenelement 40 dargestellt, welches anstelle des in den Figuren 1 bis 3 gezeigten Seitenelements 24 verwendbar ist. Das alternative Seitenelement 40 entspricht im Wesentlichen dem Seitenelement 24 des in den Figuren 1 bis 3 dargestellten Kraftfahrzeugsitzes 2. Mithin werden im Folgenden lediglich die Unterscheidungsmerkmale erläutert. Für alle weiteren Merkmale gelten die obigen Ausführungen betreffend das Seitenelement 24 entsprechend.

Während das in den Figuren 1 bis 3 dargestellte Seitenelement 24 einteilig ausgebildet ist, umfasst das alternative Seitenelement 40 ein erstes Seitenteilelement 48 und ein mit dem ersten Seitenteilelement 48 verschraubtes zweites Seitenteilelement 50.

In dem ersten Seitenteilelement 48 sind wie bei dem Seitenelement 24 die erste Führungskulisse 12 und die zweite Führungskulisse 14 ausgebildet.

Das zweite Seitenteilelement 50 umfasst eine Antriebsaussparung 38, in welcher der Antriebsbolzen 36 geführt ist. Eine die Antriebsaussparung 38 definierende Wand umfasst eine Verzahnung, mit der die Verzahnung des Antriebsbolzens 36 kämmt.

Bei dem in Figur 4 gezeigten Seitenelement 40 erfolgt eine Führung des Antriebsbolzens 38 also nicht wie bei dem in den Figuren 1 bis 3 dargestellten Seitenelement 24 auf der Oberseite des Seitenelements 40, sondern in der Antriebsaussparung 38.

Die Antriebsaussparung 38 umfasst einen geraden Abschnitt und einen kreisbogenförmigen Abschnitt, welcher in Kraftfahrzeugsitz-Längsrichtung vorne an den geraden Abschnitt angrenzt und sich ausgehend von dem geraden Abschnitt in Kraftfahrzeugsitz-Längsrichtung nach vorne und in Kraftfahrzeugsitz-Hochrichtung nach unten erstreckt. Den Kreismittelpunkt des kreisbogenförmigen Abschnitts bildet der Mittelpunkt des ersten Führungszapfens 16, wenn die Sitzstruktur 4 in der Zwischenstellung, in der Einstiegsstellung oder in einer Stellung zwischen der Zwischenstellung und der Einstiegsstellung angeordnet ist.

Es ist ebenfalls denkbar, dass das in Figur 4 dargestellte Seitenelement 40 einteilig ausgebildet ist.

### Bezugszeichenliste:

- 2: Kraftfahrzeugsitz
- 4: Sitzstruktur
- 6: Sitzelement
- 8: Rückenlehne
- 10: Kulissenführung
- 12: erste Führungskulisse
- 14: zweite Führungskulisse
- 16: erster Führungszapfen
- 18: zweiter Führungszapfen
- 20: gerader Abschnitt
- 22: Kreisbogenabschnitt
- 24: Seitenelement
- 26: Verriegelungsanordnung
- 28: Verriegelungsbolzen
- 30: Aussparung
- 32: Sicherungselement
- 34: Verzahnung
- 36: Antriebsbolzen
- 38: Antriebsaussparung
- 40: alternatives Seitenelement
- 42: Verzahnung
- 44: Hinterkante eines Türausschnitts
- 46: Sitzlängsverstellung
- 48: erstes Seitenteilelement
- 50: zweites Seitenteilelement

## Patentansprüche

1. Kraftfahrzeugsitz für ein Kraftfahrzeug, umfassend
eine Sitzstruktur (4) mit einem Sitzelement (6) und einer Rückenlehne (8), wobei die Sitzstruktur (4) aus einer Gebrauchsstellung, in der sich das Sitzelement (6) in etwa horizontal erstreckt, über eine Zwischenstellung in eine Einstiegsstellung verstellbar ist, in der das Sitzelement (6) aus der Horizontalen geneigt ist, und
eine Kulissenführung (10), mittels welcher die Sitzstruktur (4) derart führbar ist, dass die Sitzstruktur (4) von der Gebrauchsstellung bis zu der Zwischenstellung translatorisch bewegbar ist und von der Zwischenstellung bis zu der Einstiegsstellung rotatorisch bewegbar ist,
wobei die Kulissenführung (10) eine erste Führungskulisse (12), die sich in Kraftfahrzeugsitz-Längsrichtung erstreckt, und einen ersten Führungszapfen (16) umfasst, der sich in Kraftfahrzeugsitz-Querrichtung erstreckt und in der ersten Führungskulisse (12) verschiebbar geführt ist, wobei die erste Führungskulisse (12) oder der erste Führungszapfen (16) starr mit der Sitzstruktur (4) verbunden ist und der erste Führungszapfen (16) bzw. die erste Führungskulisse (12) karosseriefest anordbar ist, und
wobei die Kulissenführung (10) eine zweite Führungskulisse (14) und einen zweiten Führungszapfen (18) umfasst, wobei die zweite Führungskulisse (14) einen sich in Kraftfahrzeugsitz-Längsrichtung erstreckenden geraden Abschnitt (20) und einen Kreisbogenabschnitt (22) umfasst, der in Kraftfahrzeugsitz-Längsrichtung vorne an den geraden Abschnitt (20) angrenzt, und der zweite Führungszapfen (18) sich in Kraftfahrzeugsitz-Querrichtung erstreckt und in der zweiten Führungskulisse (14) verschiebbar geführt ist.

2. Kraftfahrzeugsitz nach Anspruch 1, wobei der erste Führungszapfen (16) eine Rotationsachse definiert, um welche die Sitzstruktur (4) verschwenkbar ist, wenn der zweite Führungszapfen (18) in dem Kreisbogenabschnitt (22) der zweiten Führungskulisse (14) angeordnet ist.

3. Kraftfahrzeugsitz nach Anspruch 1, wobei die erste Führungskulisse (12) und die zweite Führungskulisse (14) in einem Seitenelement (24) ausgebildet sind, welches in Kraftfahrzeugsitz-Querrichtung seitlich neben der Sitzstruktur (4) angeordnet ist.

4. Kraftfahrzeugsitz nach einem der Ansprüche 1 bis 3, ferner aufweisend eine Verriegelungsanordnung (26), umfassend einen Verriegelungsbolzen (28) und eine Aussparung (30), in welcher der Verriegelungsbolzen (28) in der Gebrauchsstellung angeordnet ist, wobei die Aussparung (30) in Kraftfahrzeugsitz-Längsrichtung an einer Seite offen ist, so dass der Verriegelungsbolzen (28) bei einem Verstellen der Sitzstruktur (4) aus der Gebrauchsstellung in die Einstiegsstellung aus der Aussparung (30) entfernbar ist.

5. Kraftfahrzeugsitz nach Anspruch 4 in Verbindung mit Anspruch 3, wobei der Verriegelungsbolzen seitlich an der Sitzstruktur angeordnet ist und sich in Kraftfahrzeugsitz-Querrichtung erstreckt und die Aussparung an dem Seitenelement ausgebildet ist und in Kraftfahrzeugsitz-Längsrichtung nach vorne geöffnet ist oder dass der Verriegelungsbolzen (28) seitlich an dem Seitenelement (24) angeordnet ist und sich in Kraftfahrzeugsitz-Querrichtung erstreckt und die Aussparung (30) an der Sitzstruktur (4) ausgebildet ist und in Kraftfahrzeugsitz-Längsrichtung nach hinten geöffnet ist.

6. Kraftfahrzeug nach Anspruch 4 oder 5, wobei die Aussparung (30) in Kraftfahrzeugsitz-Längsrichtung kürzer ist als die erste Führungskulisse (12) und/oder als der gerade Abschnitt (20) der zweiten Führungskulisse (14).

7. Kraftfahrzeugsitz nach einem der Ansprüche 4 bis 6, wobei die Verriegelungsanordnung (26) ein Sicherungselement (32) umfasst, welches die Sitzstruktur (4) in der Gebrauchsstellung gegen ein Verstellen in Kraftfahrzeugsitz-Längsrichtung nach vorne sichert.

8. Kraftfahrzeugsitz nach einem der Ansprüche 3 bis 7, ferner aufweisend eine Antriebseinheit, umfassend einen sich in Kraftfahrzeugsitz-Querrichtung erstreckenden Antriebsbolzen (36), der drehbar an der Sitzstruktur (4) fixiert ist, mittels eines Motors rotierbar ist und an der Oberseite des Seitenelements (24) derart aufliegt oder das erste Seitenelement (24) eine Antriebsaussparung (38) umfasst, in der der Antriebsbolzen (36) derart angeordnet ist, dass durch Rotation des Antriebsbolzens (36) die Sitzstruktur (4) zwischen der Gebrauchsstellung und der Einstiegsstellung verstellbar ist.

9. Kraftfahrzeugsitz nach einem der Ansprüche 1 bis 8, ferner aufweisend eine weitere Kulissenführung, welche an einer in Kraftfahrzeugsitz-Querrichtung der Kulissenführung (10) gegenüberliegenden Seite der Sitzstruktur (4) angeordnet ist und bezogen auf eine Kraftfahrzeugsitz-Längsmittelebene spiegelsymmetrisch zu der Kulissenführung (10) ausgebildet ist, und/oder eine weitere Verriegelungsanordnung, welche an einer in Kraftfahrzeugsitz-Querrichtung der Verriegelungsanordnung (26) gegenüberliegenden Seite der Sitzstruktur (4) angeordnet ist und bezogen auf eine Kraftfahrzeugsitz-Längsmittelebene spiegelsymmetrisch zu der Verriegelungsanordnung (26) ausgebildet ist.

## Claims

1. Motor vehicle seat for a motor vehicle, comprising
a seat structure (4) with a seat element (6) and a backrest (8), wherein the seat structure (4) is adjustable from a use position, in which the seat element (6) extends approximately horizontally, via an intermediate position into an entry position, in which the seat element (6) is inclined from the horizontal, and
a link guide (10), by means of which the seat structure (4) is guidable such that the seat structure (4) is translationally movable from the use position to the intermediate position and is rotationally movable from the intermediate position to the entry position,
wherein the link guide (10) comprises a first guide link (12), which extends in the motor vehicle seat longitudinal direction, and a first guide pin (16), which extends in the motor vehicle seat transverse direction and is guided displaceably in the first guide link (12), wherein the first guide link (12) or the first guide pin (16) is rigidly connected to the seat structure (4) and the first guide pin (16) or the first guide link (12) respectively is arrangeable fixed to the body, and
wherein the link guide (10) comprises a second guide link (14) and a second guide pin (18), wherein the second guide link (14) comprises a straight section (20) extending in the motor vehicle seat longitudinal direction and a circular arc section (22), which adjoins the straight section (20) at the front in the motor vehicle seat longitudinal direction, and the second guide pin (18) extends in the motor vehicle seat transverse direction and is guided displaceably in the second guide link (14).

2. Motor vehicle seat according to claim 1, wherein the first guide pin (16) defines a rotation axis, about which the seat structure (4) is pivotable when the second guide pin (18) is arranged in the circular arc section (22) of the second guide link (14).

3. Motor vehicle seat according to claim 1, wherein the first guide link (12) and the second guide link (14) are formed in a side element (24), which is arranged laterally next to the seat structure (4) in the motor vehicle seat transverse direction.

4. Motor vehicle seat according to one of claims 1 to 3, further comprising a locking arrangement (26), comprising a locking bolt (28) and a recess (30), in which the locking bolt (28) is arranged in the use position, wherein the recess (30) is open on one side in the motor vehicle seat longitudinal direction, so that the locking bolt (28) is removable from the recess (30) when adjusting the seat structure (4) from the use position into the entry position.

5. Motor vehicle seat according to claim 4 in conjunction with claim 3, wherein the locking bolt is arranged laterally on the seat structure and extends in the motor vehicle seat transverse direction and the recess is formed on the side element and is open forward in the motor vehicle seat longitudinal direction or that the locking bolt (28) is arranged laterally on the side element (24) and extends in the motor vehicle seat transverse direction and the recess (30) is formed on the seat structure (4) and is open rearward in the motor vehicle seat longitudinal direction.

6. Motor vehicle seat according to claim 4 or 5, wherein the recess (30) is shorter in the motor vehicle seat longitudinal direction than the first guide link (12) and/or than the straight section (20) of the second guide link (14).

7. Motor vehicle seat according to one of claims 4 to 6, wherein the locking arrangement (26) comprises a securing element (32), which secures the seat structure (4) in the use position against adjustment forward in the motor vehicle seat longitudinal direction.

8. Motor vehicle seat according to one of claims 3 to 7, further comprising a drive unit, comprising a drive bolt (36) extending in the motor vehicle seat transverse direction, which is rotatably fixed to the seat structure (4), is rotatable by means of a motor and rests on the upper side of the side element (24) in such a manner or the first side element (24) comprises a drive recess (38), in which the drive bolt (36) is arranged in such a manner, that by rotation of the drive bolt (36) the seat structure (4) is adjustable between the use position and the entry position.

9. Motor vehicle seat according to one of claims 1 to 8, further comprising a further link guide, which is arranged on a side of the seat structure (4) opposite to the link guide (10) in the motor vehicle seat transverse direction and is formed mirror-symmetrically to the link guide (10) with respect to a motor vehicle seat longitudinal center plane, and/or a further locking arrangement, which is arranged on a side of the seat structure (4) opposite to the locking arrangement (26) in the motor vehicle seat transverse direction and is formed mirror-symmetrically to the locking arrangement (26) with respect to a motor vehicle seat longitudinal center plane.

## Revendications

1. Siège de véhicule automobile pour un véhicule automobile, comprenant
une structure de siège (4) avec un élément de siège (6) et un dossier (8), la structure de siège (4) étant réglable d'une position d'utilisation, dans laquelle l'élément de siège (6) s'étend approximativement horizontalement, via une position intermédiaire dans une position d'entrée, dans laquelle l'élément de siège (6) est incliné par rapport à l'horizontale, et
un guidage à coulisse (10), au moyen duquel la structure de siège (4) peut être guidée de telle sorte que la structure de siège (4) est mobile en translation de la position d'utilisation jusqu'à la position intermédiaire et est mobile en rotation de la position intermédiaire jusqu'à la position d'entrée,
le guidage à coulisse (10) comprenant une première coulisse de guidage (12), qui s'étend dans la direction longitudinale du siège de véhicule automobile, et un premier axe de guidage (16), qui s'étend dans la direction transversale du siège de véhicule automobile et est guidé de manière déplaçable dans la première coulisse de guidage (12), la première coulisse de guidage (12) ou le premier axe de guidage (16) étant relié rigidement à la structure de siège (4) et le premier axe de guidage (16) ou la première coulisse de guidage (12) respectivement pouvant être disposé fixe à la carrosserie, et
le guidage à coulisse (10) comprenant une deuxième coulisse de guidage (14) et un deuxième axe de guidage (18), la deuxième coulisse de guidage (14) comprenant une section droite (20) s'étendant dans la direction longitudinale du siège de véhicule automobile et une section en arc de cercle (22), qui est adjacente à la section droite (20) à l'avant dans la direction longitudinale du siège de véhicule automobile, et le deuxième axe de guidage (18) s'étendant dans la direction transversale du siège de véhicule automobile et étant guidé de manière déplaçable dans la deuxième coulisse de guidage (14).

2. Siège de véhicule automobile selon la revendication 1, le premier axe de guidage (16) définissant un axe de rotation, autour duquel la structure de siège (4) est pivotable lorsque le deuxième axe de guidage (18) est disposé dans la section en arc de cercle (22) de la deuxième coulisse de guidage (14).

3. Siège de véhicule automobile selon la revendication 1, la première coulisse de guidage (12) et la deuxième coulisse de guidage (14) étant formées dans un élément latéral (24), qui est disposé latéralement à côté de la structure de siège (4) dans la direction transversale du siège de véhicule automobile.

4. Siège de véhicule automobile selon l'une des revendications 1 à 3, comprenant en outre un dispositif de verrouillage (26), comprenant un boulon de verrouillage (28) et un évidement (30), dans lequel le boulon de verrouillage (28) est disposé dans la position d'utilisation, l'évidement (30) étant ouvert d'un côté dans la direction longitudinale du siège de véhicule automobile, de sorte que le boulon de verrouillage (28) peut être retiré de l'évidement (30) lors d'un réglage de la structure de siège (4) de la position d'utilisation dans la position d'entrée.

5. Siège de véhicule automobile selon la revendication 4 en liaison avec la revendication 3, le boulon de verrouillage étant disposé latéralement sur la structure de siège et s'étendant dans la direction transversale du siège de véhicule automobile et l'évidement étant formé sur l'élément latéral et étant ouvert vers l'avant dans la direction longitudinale du siège de véhicule automobile ou le boulon de verrouillage (28) étant disposé latéralement sur l'élément latéral (24) et s'étendant dans la direction transversale du siège de véhicule automobile et l'évidement (30) étant formé sur la structure de siège (4) et étant ouvert vers l'arrière dans la direction longitudinale du siège de véhicule automobile.

6. Siège de véhicule automobile selon la revendication 4 ou 5, l'évidement (30) étant plus court dans la direction longitudinale du siège de véhicule automobile que la première coulisse de guidage (12) et/ou que la section droite (20) de la deuxième coulisse de guidage (14).

7. Siège de véhicule automobile selon l'une des revendications 4 à 6, le dispositif de verrouillage (26) comprenant un élément de sécurité (32), qui sécurise la structure de siège (4) dans la position d'utilisation contre un réglage vers l'avant dans la direction longitudinale du siège de véhicule automobile.

8. Siège de véhicule automobile selon l'une des revendications 3 à 7, comprenant en outre une unité d'entraînement, comprenant un boulon d'entraînement (36) s'étendant dans la direction transversale du siège de véhicule automobile, qui est fixé de manière rotative à la structure de siège (4), peut être mis en rotation au moyen d'un moteur et repose sur la face supérieure de l'élément latéral (24) de telle manière ou le premier élément latéral (24) comprend un évidement d'entraînement (38), dans lequel le boulon d'entraînement (36) est disposé de telle manière, que par rotation du boulon d'entraînement (36) la structure de siège (4) est réglable entre la position d'utilisation et la position d'entrée.

9. Siège de véhicule automobile selon l'une des revendications 1 à 8, comprenant en outre un guidage à coulisse supplémentaire, qui est disposé sur un côté de la structure de siège (4) opposé au guidage à coulisse (10) dans la direction transversale du siège de véhicule automobile et est formé en symétrie miroir par rapport au guidage à coulisse (10) par rapport à un plan médian longitudinal du siège de véhicule automobile, et/ou un dispositif de verrouillage supplémentaire, qui est disposé sur un côté de la structure de siège (4) opposé au dispositif de verrouillage (26) dans la direction transversale du siège de véhicule automobile et est formé en symétrie miroir par rapport au dispositif de verrouillage (26) par rapport à un plan médian longitudinal du siège de véhicule automobile.
